# DEMANDE DE BREVET EUROPEEN

(11) **EP 1 074 680 A1**
(43) Date de publication de la demande: **07.02.2001**
(21) Numéro de dépôt: 00402231.5
(22) Date de dépôt: 04.08.2000
(51) Int. Cl.: E05B 47/00, E05B 65/12

(54) **Boîtier de serrure électrique pour un élément de fermeture d'un coffre de véhicule automobile**

(30) Priorité: 06.08.1999 FR 9910284
(71) Demandeur: Aries Industries Mecanismes et Decoupage Fin, 91940 Les Ulis (FR)
(72) Inventeur: Vige, Sylvie, 78760 Jouars Ponchartrain (FR); Au Truong, Minh, 92290 Chatenay-Malabry (FR)
(74) Mandataire: Lanceplaine, Jean-Claude

(57) **Abrégé**

L'invention a pour objet un boîtier de serrure électrique pour un élément de fermeture d'un coffre de véhicule automobile, comprenant un module mécanique (10), un module électrique (30) et une chaîne cinématique (34,35,36). Le boîtier comprend un premier élément (41) de réception du module mécanique (10), un second élément (50) de support du module électrique (30) et de la chaîne cinématique (34,35,36) relié à la partie supérieure du premier élément (41) par une charnière (55) de pivotement du second élément (50) sur le premier élément (41) et un couvercle (60) relié au second élément par une charnière (56) de pivotement dudit couvercle (60) sur la face du second élément (50) opposée à celle en contact avec le premier élément (41).

## Description

La présente invention concerne un boîtier de serrure électrique pour élément de fermeture d'un coffre de véhicule automobile, comme par exemple un volet ou un hayon de coffre.

Les éléments de fermeture de coffre de véhicule automobile sont équipés d'une serrure qui comporte généralement au moins une platine montée sur l'élément de fermeture du coffre et qui supporte les différents éléments mécaniques de la serrure.

Ces éléments mécaniques sont généralement constitués par un pêne monté sur la platine et pivotant autour d'un axe entre une position ouverte dégagée d'une gâche et une position enclenchée sur ladite gâche et un cliquet monté sur ladite platine et pivotant autour d'un axe entre une position de blocage du pêne en position fermée et une position de libération dudit pêne.

Le pêne est associé à un organe élastique de rappel en position ouverte c'est à dire dégagée de la gâche et le cliquet est associé à un organe élastique de rappel en direction du pêne.

Ces éléments mécaniques sont associés avec un module électrique qui comporte un moteur électrique dont l'arbre de sortie coopère avec une chaîne cinématique agissant sur un organe d'actionnement du cliquet.

Les différents éléments mécaniques ainsi que le module électrique sont disposés dans un boîtier fixé sur la platine qui est elle-même montée sur l'élément de fermeture du coffre.

Jusqu'à présent, les boîtiers de serrure sont formés d'au moins deux pièces indépendantes, un fond de support des différents éléments de la serrure et un couvercle fixé par exemple par des organes de vissage sur le fond.

Le fond est muni, à sa base, d'un avaloir destiné à recevoir la gâche montée sur la structure du coffre lors de la fermeture de l'élément de fermeture de ce coffre.

Ce type de boîtiers généralement réalisé en matière plastique nécessite plusieurs opérations de moulage par injection au cours de sa fabrication ainsi que des opérations d'assemblage lors de son montage sur le véhicule et l'utilisation d'organes de vissage pour fixer le couvercle sur le fond ce qui augmente sensiblement le coût des serrures munies de ces boîtiers.

L'invention a pour but d'éviter ces inconvénients.

L'invention a donc pour objet un boîtier de serrure électrique pour un élément de fermeture d'un coffre de véhicule automobile, ladite serrure comprenant, d'une part, un module mécanique comportant, sur au moins une platine, un pêne pivotant entre une position dégagée d'une gâche et une position enclenchée sur ladite gâche, un cliquet pivotant entre une position de blocage du pêne en position enclenchée et une position de libération dudit pêne et un organe de commande du cliquet et, d'autre part, un module électrique comportant un détecteur de la position du pêne et un circuit de connexion et d'alimentation du détecteur et d'un moteur électrique dont l'arbre de sortie coopère avec une chaîne cinématique d'actionnement de l'organe de commande du cliquet, caractérisé en ce que le boîtier comprend:
- un premier élément de réception du module mécanique et comportant une partie supérieure de support de ladite platine et une partie inférieure en forme de U inversé formant un logement pour le pêne et le cliquet et munie à sa base d'un avaloir destiné au passage de la gâche,
- un second élément de support du module électrique et de la chaîne cinématique relié à la partie supérieure du premier élément par une charnière de pivotement du second élément sur le premier élément pour raccorder la chaîne cinématique à l'organe de commande du cliquet,
- et un couvercle relié au second élément par une charnière de pivotement dudit couvercle sur la face du second élément opposée à celle en contact avec le premier élément pour maintenir le module électrique et la chaîne cinématique.

Selon d'autres caractéristiques de l'invention:
- le premier et le second éléments et le couvercle forment une pièce en matière plastique,
- la charnière entre le premier et le second éléments s'étend parallèlement au plan de pivotement du pêne,
- la charnière entre le second élément et le couvercle s'étend perpendiculairement au plan de pivotement du pêne,
- le second élément comporte des portées de support du module électrique et de la chaîne cinématique et le couvercle comporte des portées complémentaires de maintien dudit module électrique et de ladite chaîne cinématique, lesdites portées étant venues de matière avec ledit boîtier,
- le second élément comporte au moins une patte d'accrochage sur le premier élément et le couvercle comporte au moins une patte d'accrochage sur le second élément, lesdites pattes d'accrochage étant venues de matière avec ledit boîtier.

D'autres caractéristiques et avantages de l'invention apparaîtront au cours de la description qui va suivre et faite en référence aux dessins annexés, sur lesquels:
- la Fig. 1 est une vue schématique en perspective éclatée montrant le boîtier conforme à l'invention, ainsi que le module mécanique et le module électrique de la serrure,
- la Fig. 2 est une vue en perspective de dessus du boîtier conforme à l'invention,
- la Fig. 3 est une vue en perspective de dessous du boîtier conforme à l'invention,
- la Fig. 4 est une vue en perspective du boîtier muni du module électrique et de la chaîne cinématique,
- la Fig. 5 est une vue en perspective du boîtier partiellement fermé,
- la Fig. 6 est une vue en perspective du boîtier comportant le module mécanique,
- la Fig. 7 est une vue en perspective du boîtier complètement fermé.

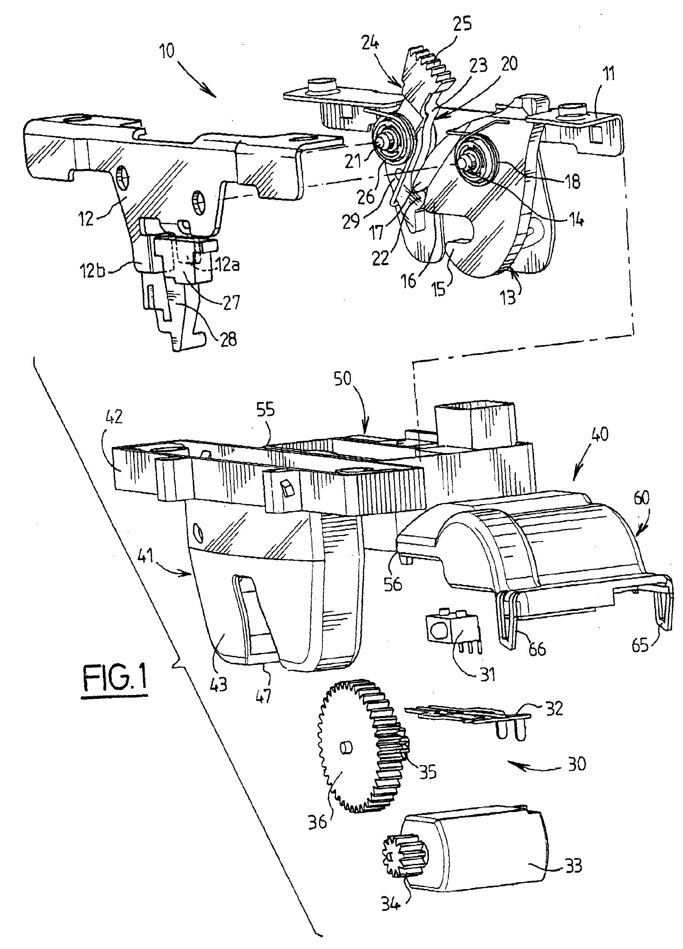

Sur la Fig. 1, on a représenté une serrure électrique pour un élément de fermeture d'un coffre de véhicule automobile, comme par exemple un volet ou un hayon de coffre.

Cette serrure électrique comprend un module mécanique 10, un module électrique 30 et un boîtier 40 conforme à l'invention.

De manière classique, le module mécanique 10 comprend deux platines, respectivement' 11 et 12, ayant chacune la forme d'une équerre et disposées parallèlement l'une par rapport à l'autre.

Ce module mécanique comprend également un pêne 13 monté pivotant entre les deux platines 11 et 12 au moyen d'un axe 14.

Le pêne 13 est donc monté pivotant sur cet axe 14 entre deux positions, une position dégagée d'une gâche et une position enclenchée sur ladite gâche.

Ce pêne 13 comporte, à sa base, un crochet 15 destiné à recevoir la gâche et, du côté sur lequel est ménagé ce crochet 15, deux crans, respectivement 16 et 17, destinés à coopérer avec un cliquet 20.

Le pêne 13 est rappelé dans la position ouverte par un organe élastique 18 formé par un ressort à spirales.

Le cliquet 20 est monté pivotant entre les deux platines 11 et 12 sur un axe 21 et ce cliquet présente une forme générale allongée comportant un bras inférieur 29 terminé par un nez 22 agencé pour se loger dans un des crans 16 et 17 du pêne 13 et un bras supérieur 23 qui traverse les platines 11 et 12.

Le cliquet 20 est associé en rotation à un organe de commande 24 qui comporte à sa partie supérieure un secteur denté 25.

L'ensemble constitué par le cliquet 20 et l'organe de commande 24 est rappelé en direction du pêne 13 par un organe élastique formé par un ressort à spirales 26.

La platine 12 est munie, à sa partie inférieure, d'une première patte 12a verticale et d'une seconde patte 12b verticale destinées à recevoir une butée 27 en matériau élastomère. Un support 28 en matière plastique est emmanché sur la butée 27.

La butée 27 forme une butée de fin de course pour amortir le choc dû à l'engagement de la gâche ainsi qu'une butée de position du cliquet 20 pour amortir et réduire le bruit de la remontée dudit cliquet.

Par ailleurs, le support 28 assure un calage latéral de l'élément de fermeture par rapport à la structure du coffre du véhicule automobile.

Le module électrique désigné dans son ensemble par la référence 30 se compose d'un détecteur 31 de la position du pêne 13 et qui a pour but de transmettre l'information sur cette position à l'électronique embarquée du véhicule automobile et d'un circuit 32 de connexion et d'alimentation du détecteur 31 et d'un moteur électrique 33.

Ce circuit 32 transmet également le signal d'information issu du détecteur 31.

Le moteur électrique 33 est par exemple un moteur à courant continu dont l'arbre de sortie entraîne en rotation une chaîne cinématique qui actionne l'organe de commande 24 par l'intermédiaire du secteur denté 25 et de ce fait le cliquet 20.

La chaîne cinématique se compose d'un petit pignon 34 monté sur l'arbre de sortie du moteur électrique 33 et qui engrène avec un pignon 36 de grand diamètre solidaire en rotation avec un pignon 35 de petit diamètre qui engrène avec le secteur denté 25 de l'organe de commande 24.

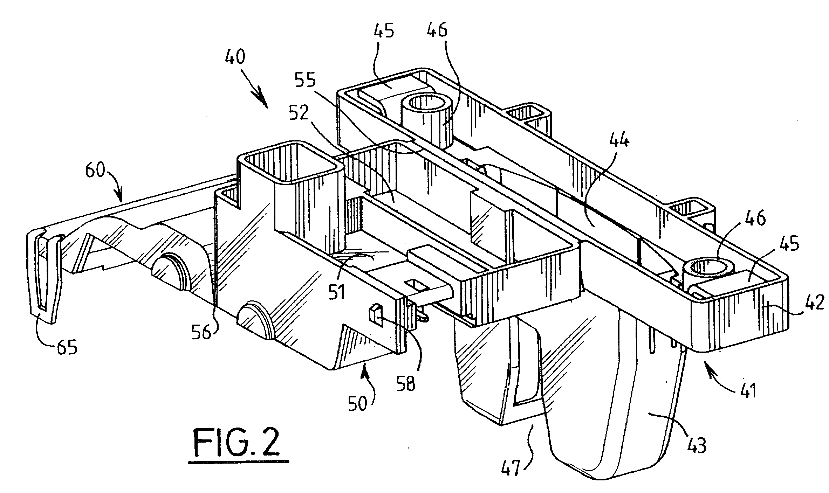

Les différents éléments composant le module mécanique 10, le module électrique 30 ainsi que la chaîne cinématique formée par les pignons 34, 35 et 36 sont logés dans le boîtier 40 qui sera décrit en se reportant aux Figs. 2 à 4.

Le boîtier 40 forme une pièce en matière plastique injectée et se compose d'un premier élément 41 de réception du module mécanique 10.

Ce premier élément 41 comprend, d'une part, une partie supérieure 42 de forme générale rectangulaire et creuse constituant un support des platines 11 et 12 et, d'autre part, une partie inférieure 43 en forme de U inversé et formant un logement 44 pour le pêne 13 et le cliquet 20.

Ainsi que représenté à la Fig. 2, la partie supérieure 42 comporte intérieurement deux pattes 45 d'appui des platines 11 et 12 et deux cylindres 46 destinés au passage d'organes de fixation, non représentés, pour le maintien de l'ensemble de la serrure sur l'élément de fermeture du coffre du véhicule automobile.

La partie inférieure 43 est munie à sa base d'un avaloir 47 destiné au passage de la gâche coopérant avec le pêne 13 pour assurer le verrouillage de l'élément de fermeture du coffre du véhicule automobile.

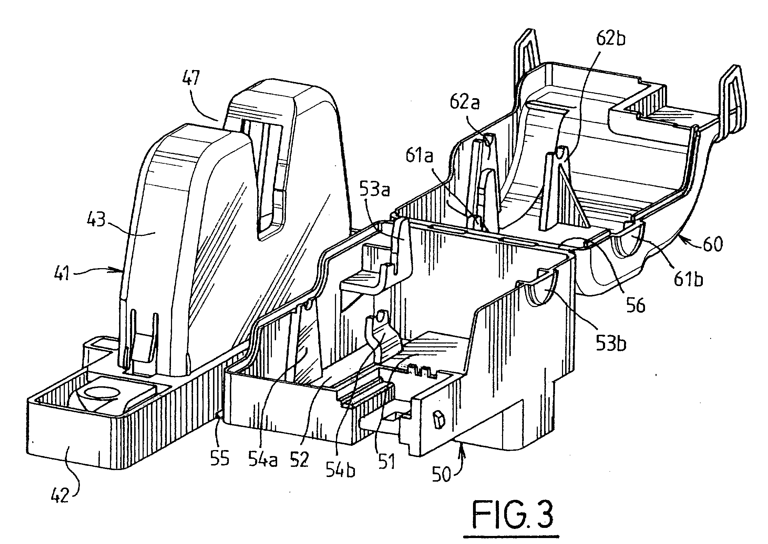

Ainsi, que représenté notamment à la Fig. 3, le boîtier 40 comporte également un second élément 50 de support du module électrique 30 et des pignons 35 et 36 de la chaîne cinématique.

Ce second élément 50 présente une forme générale rectangulaire et creuse de longueur inférieure à celle de la partie supérieure 42 du premier élément 41 et comporte un fond 51 couvrant une partie de la surface du second élément 50 de façon à ménager un espace libre 52.

Le second élément 50 comporte intérieurement, des portés 53a et 53b de support du moteur électrique 33 et du petit pignon de sortie 34 et des portées 54a et 54b de support de l'ensemble constitué par les pignons 35 et 36.

Le second élément 50 du boîtier 40 est relié à la partie supérieure 42 du premier élément 41 par une charnière 55 de pivotement dudit second élément 50 sur ledit premier élément 41 pour raccorder le petit pignon 35 de la chaîne cinématique avec le secteur denté 25 de l'organe de commande 24 du cliquet 20.

Enfin, le boîtier 40 est aussi formé par un couvercle 60 qui comporte, sur sa face interne, d'une part, des portées 61a et 61b complémentaires aux portées 53a et 53b du second élément 50 pour le maintien du moteur électrique 33 et du petit pignon 34 lorsque le couvercle 60 est rabattu sur ledit second élément 50 et, d'autre part, des portées 62a et 62b complémentaires aux portées 54a et 54b pour le maintien des pignons 35 et 36 lorsque le couvercle 60 est rabattu sur ledit second élément 50, comme on le verra ultérieurement.

Pour permettre de rabattre le couvercle 60 sur le second élément 50, ce couvercle 60 est relié audit second élément 50 par une charnière 56 de pivotement sur la face du second élément 50 opposée à celle en contact avec le premier élément 41 de façon à maintenir l'ensemble formé par le module électrique et la chaîne cinématique au moyen des portées 53a, 53b coopérant avec les portées 61a, 61b et les portées 54a et 54b coopérant avec les portées 62a, 62b.

Les différentes portées ménagées sur le second élément 50 et le couvercle 60 ainsi que les plaques 45 de support des platines et les cylindres 46 de passage des organes de fixation sont venus de matière lors du moulage par injection du boîtier 40.

Le montage du module mécanique 10 ainsi que du module électrique 30 et des pignons 35 et 36 dans le boîtier 40 est réalisé de la façon suivante.

Tout d'abord, on fixe sur le fond 51 du second élément 50 le détecteur 31 et le circuit 32 par exemple par soudure à ultrasons ou par surmoulage ou par encliquetage et les liaisons avec le détecteur 31 sont réalisées par montage légèrement en force sur les broches correspondantes.

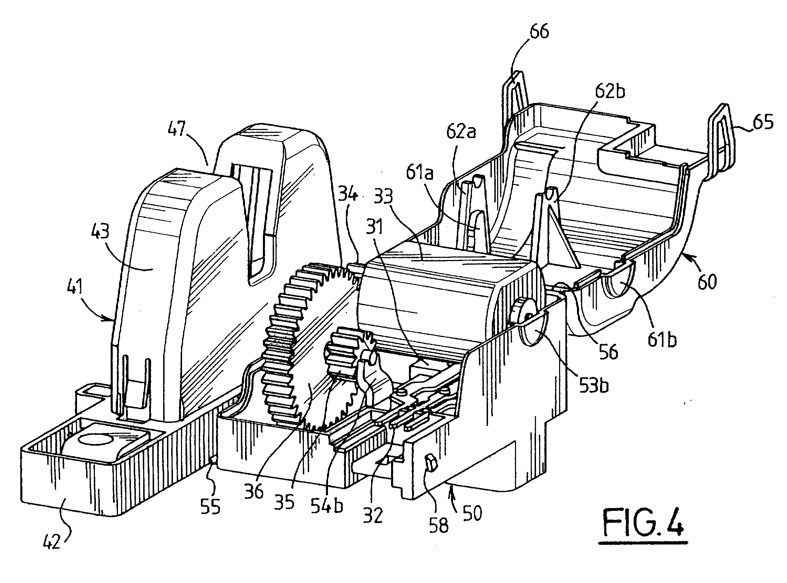

Ensuite, on pose sur les portées 53a et 53b l'ensemble formé par le moteur électrique 33 et le petit pignon 34 et on pose sur les portées 54a et 54b l'ensemble constitué par les pignons 35 et 36, comme représenté à la Fig. 4.

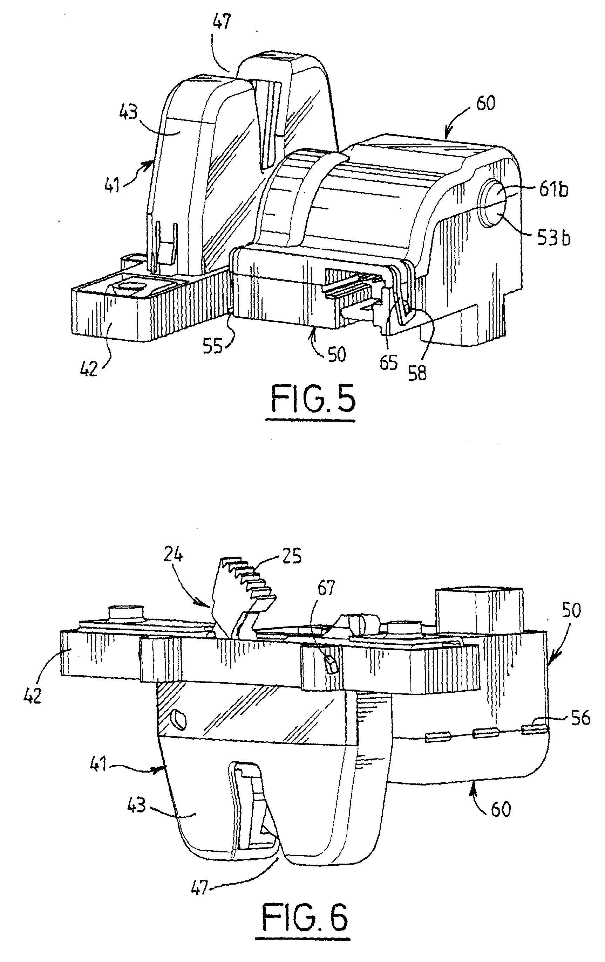

Le couvercle 60 est rabattu sur le second élément 50 par basculement autour de la charnière 56 de telle manière que les portées 61a et 61b viennent sur les portées 53a et 53b afin de maintenir le moteur électrique 33 et le petit pignon 34 et que les portées 62a et 62b viennent en vis à vis des portées 54a et 54b de façon à maintenir les pignons 35 et 36, ainsi que représenté à la Fig. 5.

Le boîtier 60 comporte sur sa face externe deux pattes d'accrochage 65 qui coopèrent chacune avec un téton 58 ménagé sur la face externe du second élément 50. Les deux pattes d'accrochage 65 sont disposées symétriquement et de manière opposée l'une par rapport à l'autre. De même pour les tétons 58 qui sont disposés symétriquement et de manière opposée l'un par rapport à l'autre.

La patte 65 et le téton 58 sont venus de matière avec le boîtier 40 lors du moulage de celui-ci.

Après cette première opération d'assemblage, le module mécanique 10 est placé dans le premier élément 41 de telle manière que la partie supérieure de l'organe de commande 24 soit en saillie, comme représenté à la Fig. 6.

L'ensemble formé par le second élément 50 et le couvercle 60 fixé sur ledit élément 50 est rabattu sur le premier élément 41 par pivotement autour de la charnière 55 de telle manière que le pignon 35 vienne sur le secteur denté 25 de l'organe de commande 24 du cliquet 20.

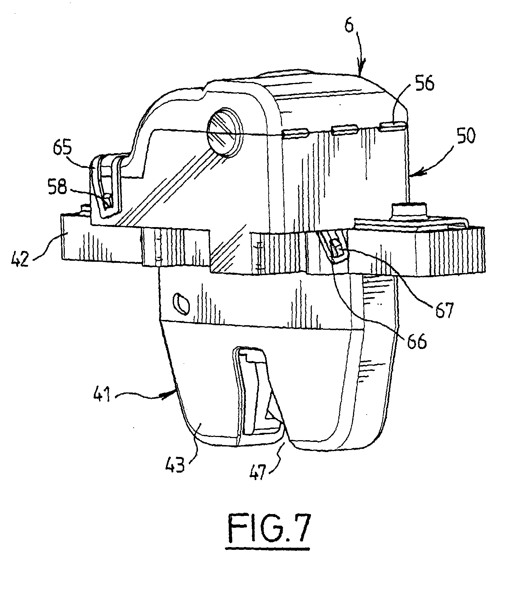

Pour verrouiller l'ensemble formé par le second élément 50 et le couvercle 60 sur le premier élément 41, le second élément 41 comporte deux pattes d'accrochage 66 qui coopèrent chacune avec un téton 67 formé sur la face externe de la partie supérieure 42 du premier élément 41, comme représenté à la Fig. 7. Les deux pattes d'accrochage 66 sont disposées symétriquement et de manière opposée l'une par rapport à l'autre. De même pour les tétons 67 qui sont disposés symétriquement et de manière opposée l'un par rapport à l'autre.

Le boîtier 40 contenant le module mécanique 10, le module électrique 30 ainsi que la chaîne cinématique formée par les pignons 34, 35 et 36 constitue un ensemble compact qui peut être facilement monté sur un élément de fermeture d'un coffre de véhicule automobile, comme par exemple un volet ou un hayon de fermeture du coffre.

La conception du boîtier selon l'invention facilite le montage et l'assemblage des différents éléments et évite tout organe de fixation indépendant ce qui permet de rendre automatique le positionnement de ces éléments dans le boîtier.

Ce boîtier peut être réalisé en matière plastique par exemple renforcée par des fibres de verre pour assurer une bonne tenue mécanique ainsi qu'un aspect approprié.

## Revendications

1. Boîtier de serrure électrique pour un élément de fermeture d'un coffre de véhicule automobile, ladite serrure comprenant, d'une part, un module mécanique (10) comportant, sur au moins une platine (11, 12) un pêne (13) pivotant entre une position dégagée d'une gâche et une position enclenchée sur ladite gâche, un cliquet (20) pivotant entre une position de blocage du pêne (13) en position enclenchée et une position de libération dudit pêne (13) et un organe de commande (24) du cliquet (20) et, d'autre part, un module électrique (30) comportant un détecteur (31) de la position du pêne (13) et un circuit (32) de connection et d'alimentation du détecteur (31) et d'un moteur électrique (33) dont l'arbre de sortie coopère avec une chaîne cinématique (34, 35, 36) d'actionnement de l'organe de commande (24) du cliquet (20), caractérisé en ce que le boîtier comprend :
- un premier élément (41) de réception du module mécanique (10) et comportant une partie supérieure (42) de support de ladite platine (11, 12) et une partie inférieure (43) en forme de U inversé formant un logement (44) pour le pêne (13) et le cliquet (20) et muni à sa base d'un avaloir (47) destiné au passage de la gâche,
- un second élément (50) de support du module électrique (30) et de la chaîne cinématique (34, 35, 36) relié à la partie supérieure du premier élément (41) par une charnière (55) de pivotement du second élément (50) sur le premier élément pour raccorder la chaîne cinématique (34, 35, 36) à l'organe de commande (24) du cliquet (20),
- et un couvercle (60) relié au second élément par une charnière (56) de pivotement dudit couvercle (60) sur la face du second élément (50) opposée à celle en contact avec le premier élément (41) pour maintenir le module électrique (30) et la chaîne cinématique (34, 35,36).

2. Boîtier selon la revendication 1, caractérisé en ce que le premier (41) et le second (50) éléments et le couvercle (60) forment une pièce en matière plastique.

3. Boîtier selon la revendication 1 ou 2, caractérisé en ce que la charnière (55) entre le premier (41) et le second (50) élément s'étend parallèlement au plan de pivotement du pêne (13).

4. Boîtier selon la revendication 1 ou 2, caractérisé en que la charnière (56) entre le second élément (50) et le couvercle (60) s'étend perpendiculairement au plan de pivotement du pêne (13).

5. Boîtier selon la revendication 1 ou 2, caractérisé en ce que le second élément (50) comporte des portées (53a, 53b ; 54a, 54b) de support du module électrique (30) et de la chaîne cinématique (35, 36) et le couvercle (60) comporte des portées complémentaires (61a, 61b ; 62a, 62b) de maintien dudit module électrique et de ladite chaîne cinématique, lesdites portées étant venues de matière avec ledit boîtier.

6. Boîtier selon la revendication 1 ou 2, caractérisé en ce que le second élément (60) comporte au moins une patte (67) d'accrochage sur le premier élément (41) et le couvercle (60) comporte au moins une patte (65) d'accrochage sur le second élément (50), lesdites pattes (65, 67) d'accrochage étant venues de matière avec ledit boîtier.
